# EUROPÄISCHE PATENTANMELDUNG

(11) **EP 1 383 220 A2**
(43) Veröffentlichungstag der Anmeldung: **21.01.2004**
(21) Anmeldenummer: 03014337.4
(22) Anmeldetag: 26.06.2003
(51) Int. Cl.: H02H 7/085

(54) **Überlastschutz für einen drehfeldbetriebenen elektrischen Verbraucher**

(30) Priorität: 17.07.2002 DE 10232208
(71) Anmelder: WILO AG, 44263 Dortmund (DE)
(72) Erfinder: Meier-Wagner, Michael, 44269 Dortmund (DE)
(74) Vertreter: COHAUSZ DAWIDOWICZ HANNIG & PARTNER

(57) **Zusammenfassung**

Die Erfindung betrifft einen drehfeldbetriebenen elektrischen Verbraucher, insbesondere einen Drehstrommotor, der an die Phasen (L1, L2, L3) eines Mehr-Phasen-Stromnetzes anschliessbar ist und eine Schutzschaltung (4) gegen insbesondere thermische Überlastschäden umfasst, **dadurch gekennzeichnet, dass** der Verbraucher im Überlastfall mittels der Schutzschaltung (4) von einer Phase (L1) trennbar ist und an den übrigen Phasen (L2, L3) des Stromnetzes angeschlossen bleibt. Die Erfindung betrifft weiterhin ein Verfahren zum Schutz eines drehfeldbetriebenen elektrischen Verbrauchers sowie eine Schutzschaltung (4) zur Druchführung des Verfahrens.

## Beschreibung

Die Erfindung betrifft einen drehfeldbetriebenen elektrischen Verbraucher, insbesondere einen Drehstrommotor, der an die Phasen eines Mehr-Phasen-Stromnetzes anschließbar ist und eine Schutzschaltung gegen insbesondere thermische Überlastschäden umfasst. Die Erfindung betrifft weiterhin ein Verfahren zum Schutz von drehfeldbetriebenen elektrischen Verbrauchern gegen insbesondere thermische Überlastung sowie eine Schutzschaltung zur Durchführung des Verfahrens.

Es ist allgemein bekannt, dass drehfeldbetriebene elektrische Verbraucher, die an ein Mehrphasenstromnetz, z.B. an ein 3-Phasenstromnetz anschließbar sind, gegen Überlastschäden, insbesondere thermische Überlastung zu schützen sind. Um einen solchen Schutz und damit eine Konformität mit den einschlägigen VDEund CE-Normen zu erreichen, ist es bekannt, dass zur Vermeidung von Überlastschäden die elektrischen Teilverbraucher eines drehfeldbetriebenen elektrischen Verbrauchers, also z.B. eine Anzahl von N-Teilverbrauchern, die jeweils an eine Phase eines N-Phasen-Stromnetzes angeschlossen sind, von allen N Phasen gleichzeitig abzuschalten sind.

In einem Überlastfall kann dementsprechend durch diese Maßnahme sichergestellt werden, dass sich der drehfeldbetriebene elektrische Verbraucher z.B. bei einer Blockierung seiner Funktion nicht zu sehr erwärmt und hierdurch Schaden nimmt.

Dies kann beispielsweise bei mit drei Phasen betriebenen Drehstrommotoren dann der Fall sein, wenn der Motor blockiert, so dass sich in den Motorwicklungen eine erhöhte Stromaufnahme einstellt, die gleichzeitig zu einer erhöhten Temperatur führt, die ohne die Abschaltung mittels einer Schutzschaltung zu der Zerstörung des Motors führen kann. Dementsprechend wäre es in Übereinstimmung mit dem Stand der Technik bei einem mit drei Phasen betriebenen Drehstrommotor vorgesehen im thermischen Überlastfall alle drei Phasen, d.h. z.B. in einer Sternschaltung der Wicklungen alle drei Wicklungen des Motors von der jeweils zugehörigen Phase zu trennen, um die Konformität mit VDE- und CE-Normen zu erreichen.

Eine derartige bekannte Schutzschaltung bzw. das Verfahren zum gleichzeitigen Abschalten aller Phasen eines drehfeldbetriebenen elektrischen Verbrauchers ist jedoch aufwendig und kostenintensiv, da Abschaltmechanismen für jede einzelne Phase vorgesehen werden müssen, d.h. z.B. bei einem Drehstrommotor, der mit drei Phasen betrieben wird, müssen insgesamt drei Schaltkontakte vorgesehen werden, um jede Wicklung von der zugehörigen Phase im Überlastfall abzuschalten.

Aufgabe der Erfindung ist es einen drehfeldbetriebenen elektrischen Verbraucher bzw. eine Schaltung und/oder ein Verfahren zur Verfügung zu stellen, mit dem besonders einfach, kostengünstig und durch geringen Materialaufwand Überlastschäden an drehfeldbetriebenen elektrischen Verbrauchern ausgeschlossen werden können, wobei gleichzeitig die durch VDE- und CE-Normen vorgegebenen Grenzwerte nicht überschritten werden.

Diese Aufgabe wird gemäß der Erfindung dadurch gelöst, dass der drehfeldbetriebene elektrische Verbraucher im Überlastfall, insbesondere im thermischen Überlastfall mittels der genannten Schutzschaltung nur von einer Phase trennbar ist, wobei der Verbraucher an den weiteren vorgesehenen Phasen des Stromnetzes angeschlossen bleibt.

Der Erfindung liegt die Überlegung zugrunde, dass schon bei der Abschaltung nur einer Phase, z.B. bei einem mit 3-Phasen-Strom betriebenen Drehstrommotor geeigneter Dimensionierung, eine genügend große Reduzierung der Leistungsaufnahme erreichbar ist, so dass eine insbesondere thermische Überlast vermieden werden kann, die sonst zur Zerstörung des elektrischen Verbrauchers führen könnte.

Um den Überlastfall zu detektieren, kann es vorgesehen sein, dass der Verbraucher mit einer thermischen Überwachung ausgestattet ist, mittels der ein thermischer Überlastfall detektierbar ist, so dass die Abschaltung der einen vorgesehenen Phase bei Überschreitung einer vorgegebenen Grenztemperatur erfolgen kann, die sich z.B. nach der Isolationsklasse des elektrischen Verbrauchers bestimmt. Hierzu kann insbesondere ein Temperatursensor an dem drehfeldbetriebenen elektrischen Verbraucher vorgesehen sein.

In einer besonderen Ausführung zeichnet sich der Verbraucher durch drei elektrische Teilverbraucher aus, die jeweils an wenigstens eine Phase eines 3-Phasen-Stromnetzes angeschlossen sind. Beispielsweise kann es sich bei einem solchen Verbraucher um einen Drehstrommotor handeln, bei dem die Teilverbraucher als Motorwicklungen ausgebildet sind, die sowohl in Stern- oder auch in der üblichen Dreieckschaltung sowie in Kombination aus beiden Varianten geschaltet sein können.

Zur Vermeidung des Überlastfalles kann es dann vorgesehen sein, dass als Schutzschaltung ein sogenannter Wicklungsschutzkontakt vorgesehen ist, der in Abhängigkeit von einer Grenztemperatur den Drehstrommotor von nur einer Phase trennt, jedoch die weiteren Phasen, im vorliegenden Fall zwei, an dem Motor angeschlossen bleiben.

Mittels eines solchen erfindungsgemäßen drehfeldbetriebenen Verbrauchers kann auf besonders kostengünstige Art und Weise der thermische Überlastfall vermieden werden, da durch eine einfache Schutzschaltung lediglich eine einzige Phase von einem entsprechenden N-Phasen-Stromnetz getrennt werden muss, wohingegen (N-1) Phasen am Verbraucher angeschaltet bleiben. Allein schon hierdurch kann der elektrische Verbraucher in einen sogenannten Impedanzgeschützten Zustand überführt werden, der sich als konform mit einschlägigen Normen auszeichnet.

Ein Ausführungsbeispiel der Erfindung ist in den nachfolgenden Figuren näher erläutert. Hierbei zeigen:
- Figur 1:: die Sternschaltung eines erfindungsgemässen drehstrombetriebenen Motors
- Figur 2:: die Berechnung der Leistungsaufnahme bei einer Sternschaltung mit drei angeschlossenen Phasen
- Figur 3:: die Berechnung der Leistungsaufnahme bei der Sternschaltung mit zwei angeschlossenen Phasen
- Figur 4:: den Vergleich der Leistungsaufnahmen gemäß Figur 2 und Figur 3
- Figur 5:: die Dreieckschaltung eines erfindungsgemässen drehstrombetriebenen Motors
- Figur 6:: die Berechnung der Leistungaufnahme bei einer Dreieckschaltung mit drei angeschlossenen Phasen
- Figur 7:: die Berechnung der Leistungaufnahme bei einer Dreieckschaltung mit drei angeschlossenen Phasen
- Figur 8:: der Vergleich der Leistungaufnahme gemäß Figuren 5 und 6

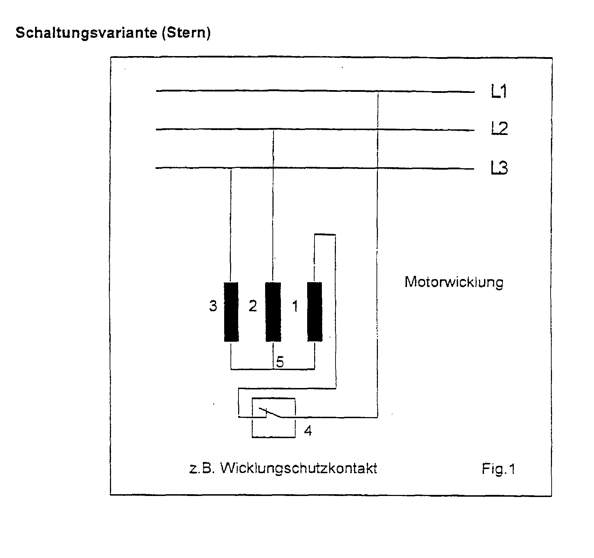

Die Figur 1 zeigt in einer üblichen Symboldarstellung einen Drehstrommotor als typischen drehfeldbetriebenen elektrischen Verbraucher, bei dem die drei Motorwicklungen 1, 2 und 3 in einer typischen Sternschaltung angeordnet sind, wobei jede Motorwicklung 1, 2 und 3 jeweils mit einem Ende der Anschlussleitung an einer der drei Drehstromphasen L1, L2 und L3 angeschlossen ist. Der Punkt 5 der Schaltung bildet den Sternpunkt, an dem auch zusätzlich ein Nulleiter angeschlossen sein kann.

Der Anschluss der Motorwicklung 1 erfolgt an die Phase L1 in diesem Ausführungsbeispiel über einen Schutzkontakt 4, der hier eine Schutzschaltung darstellt, um den Drehstrommotor vor einer thermischen Überlastung zu schützen.

Hierfür ist es vorgesehen, dass durch einen nicht dargestellten Temperatursensor die Erwärmung des Drehstrommotors, z.B. in der Nähe einer Wicklung, detektiert wird, wobei bei Überschreitung einer vorgesehenen zulässigen Grenztemperatur der Schutzkontakt, z.B. ein Bimetallschalter, in der Form ausgelöst wird, dass er die Motorwicklung 1 von der Phase L1 trennt. Ein solcher Fall kann z.B. bei einer Blockierung des Motors auftreten, wobei durch den Motorstillstand eine Zunahme der Erwärmung erfolgen kann, die bei Überschreiten einer Grenztemperatur zu Defekten am Motor führen kann.

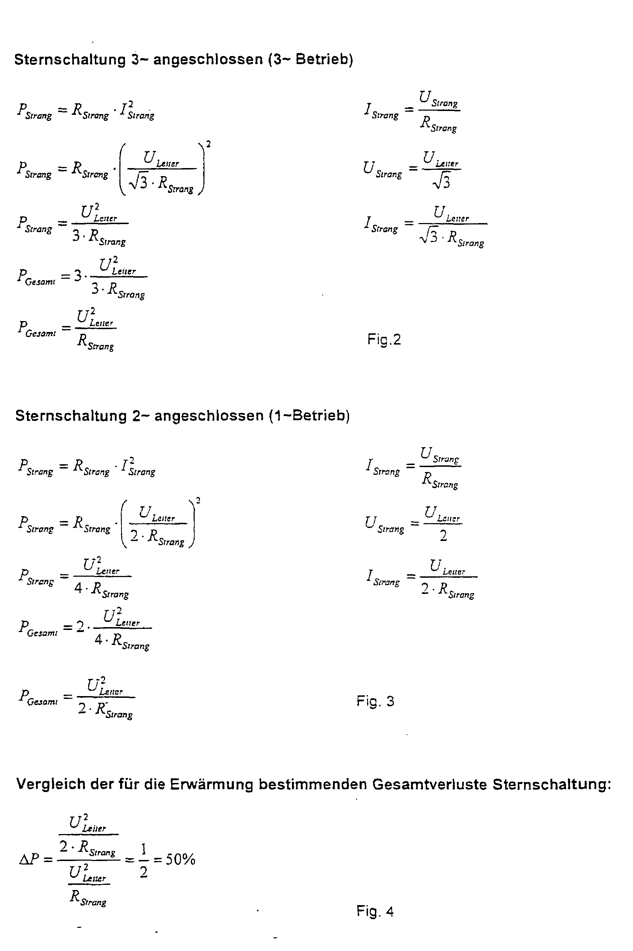

Gemäß den Formeln der Figur 2 wird hergeleitet, wie sich die Gesamtleistung des Drehstrommotors bei drei angeschlossenen Phasen, d.h. im normalen Betrieb, ergibt.

Hierbei wird ausgegangen von den Leistungen der einzelnen Stränge, d.h. innerhalb der jeweiligen Motorwicklung 1, 2 oder 3, wobei sich der Strom durch jeden Strang ergibt, durch das Verhältnis der Strangspannung zum Widerstand des Stranges. Hierbei kann unter Widerstand der frequenzabhängige Widerstand verstanden werden, mithin die Impedanz, die sich aus dem Wirkwiderstand und dem Blindwiderstand ergibt.

Unter der Leiterspannung wird die Spannung verstanden, die zwischen den jeweiligen Phasen vorherrscht, d.h. bei einem üblichen Drehstromnetz beträgt die Spannung in Deutschland beispielsweise zwischen den einzelnen Phasen 400 Volt. Mit Bezug auf den Nullpunkt 5 bei einer typischen Sternschaltung ergibt sich sodann aufgrund der Phasenverschiebung zwischen den einzelnen Phasen eine Strangspannung von ca. 231 Volt.

Letztendlich lässt sich somit ableiten, dass sich die Gesamtleistung des Drehstrommotors ergibt aus dem Quadrat der Leiterspannung, dividiert durch den Widerstand eines Stranges, unter der Annahme, dass der Widerstand der Stränge untereinander identisch ist.

In der Figur 3 ist der Fall dargestellt, dass beispielsweise durch die Auslösung des Schutzkontaktes eine der drei Motorwicklungen, in diesem Fall die Motorwicklung 1, von der Phase L1 getrennt wird. In diesem Fall ergibt sich aufgrund der Unsymetrie zwischen den verbleibenden Phasen L2 und L3 die Leiterspannung, so dass sich in jedem Strang eine Strangspannung ergibt, die der Hälfte der Leiterspannung entspricht, da die beiden verbleibenden Motorwicklungen innerhalb dieser Schaltung in Reihe liegen und bei einem angenommenen identischen Widerstand eines jeden Stranges sich dementsprechend eine hälftige Aufteilung der Leiterspannung in jedem Strang aufgrund der gleichen Spannungsteilerverhältnisse einstellt.

Mit dieser Überlegung, wie sie in der Figur 3 dargestellt ist, ergibt sich bei der dargestellten Sternschaltung mit nur zwei angeschlossenen Phasen, d.h. im ausgelösten Überlastfall, eine Gesamtleistung, die dem Quadrat der Leiterspannung, dividiert durch zweimal den Widerstand eines Stranges, entspricht.

Betrachtet man nun gemäß Figur 4 das Verhältnis der beiden Gesamtleistungen, wie sie gemäß Figur 2 und Figur 3 berechnet sind, so ist es offensichtlich, dass sich die aufgenommene Leistung in dem Fall, wo eine Phase mittels des Wicklungsschutzkontaktes getrennt wurde, gegenüber dem normalen 3-Phasen-Betrieb halbiert. Aufgrund dieser Leistungshalbierung kann eine thermische Überlastung des Drehstrommotors oder allgemein von drehfeldbetriebenen elektrischen Verbrauchern nachhaltig ausgeschlossen werden, so dass bereits eine solche Schaltung mit VDE- und CE-Normen konform ist.

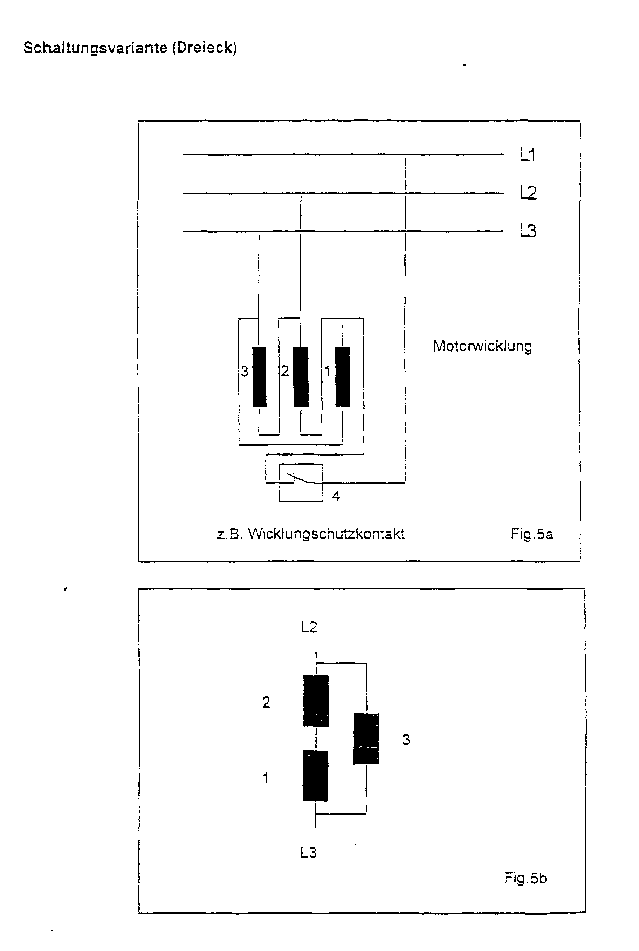

Ähnliche Überlegungen gelten auch für die typische Dreieckschaltung bei Drehstrommotoren, wie sie in der Figur 5 dargestellt ist und für alle N-phasigen Schaltungssysteme mit N>=2.

Hierbei sind die Motorwicklungen, die hier symbolisch durch die Widerstände 1, 2 und 3 dargestellt sind, jeweils an ihren Verbindungspunkten mit den Phasen L1, L2 und L3 verbunden. So gilt mit den äquivalenten Überlegungen gemäß der Figur 5a, dass sich die Gesamtleistung bei einer Dreieckschaltung ergibt, als dreimal das Quadrat der Leiterspannung, dividiert durch den Strangwiderstand, also im vorliegenden Fall 1 bzw. 2 bzw. 3, angenommen, dass jeder Widerstand identisch groß ist.

Wird nun z.B. über einen Wicklungsschutzkontakt 4 die Phase L1 vom Drehstrommotor getrennt, so ergibt sich als neue Schaltung die Darstellung gemäß der Figur 5b, d.h. die Widerstände 1 und 2 liegen in Reihe, wobei der Widerstand 3 parallel zu diesen vorher genannten Widerständen zwischen den Phasen L2 und L3 angeordnet ist.

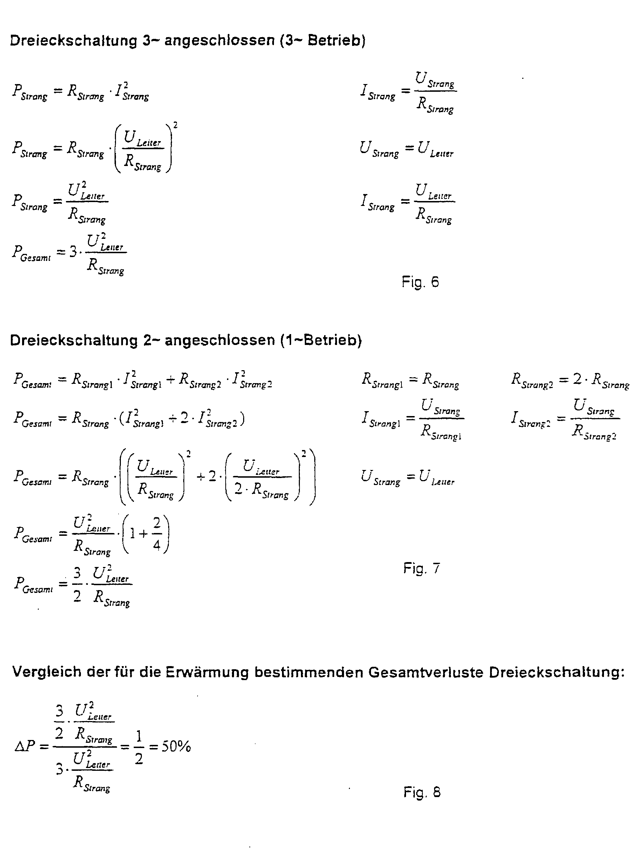

Es ergibt sich demnach ein erster Strang, in dem lediglich der Widerstand 3 angeordnet ist sowie ein zweiter Strang, in dem die Widerstände 1 und 2 bzw. zweimal der normale Strangwiderstand angeordnet ist, vorausgesetzt, dass die Widerstände gleich sind. Mit dieser Überlegung lässt sich gemäß Figur 7 ableiten, dass die Gesamtleistung des Systemes sich ergibt als dreimal das Quadrat der Leiterspannung, dividiert durch zweimal den Strangwiderstand.

Betrachtet man auch hier, wie in dem vorherigen Beispiel, das Verhältnis gemäß der Figur 8 dieser Leistungen im Fall mit drei angeschlossenen bzw. mit zwei angeschlossenen Phasen, so ergibt sich auch hier, dass sich die Gesamtleistung auf 50% im Überlastfall, d.h. wenn die Phase L1 getrennt wurde, einstellt.

Somit wird auch bei der Dreieckschaltung bei der Trennung einer Phase sichergestellt, dass sich die Temperatur des Drehstrommotors nicht weiter erhöht, wodurch sich auch hier ein impedanzschutz einstellt, d.h. der Drehstrommotor ist konform mit VDE- und CE-Normen.

Schon alleine mit dem erfindungsgemäßen Verfahren nur eine Phase bei drehfeldbetriebenen elektrischen Verbrauchern vom Netz zu trennen, kann die Einhaltung einschlägiger Normen zur Regelung thermischer Überlast erreicht werden.

## Patentansprüche

1. Drehfeldbetriebener elektrischer Verbraucher, insbesondere Drehstrommotor, der an die Phasen (L1,L2,L3) eines Mehr-Phasen-Stromnetzes anschliessbar ist und eine Schutzschaltung (4) gegen insbesondere thermische Überlastschäden umfasst, **dadurch gekennzeichnet, dass** der Verbraucher im Überlastfall mittels der Schutzschaltung (4) von einer Phase (L1) trennbar ist und an den übrigen Phasen (L2, L3) des Stromnetzes angeschlossen bleibt.

2. Verbraucher nach Anspruch 1, **dadurch gekennzeichnet, dass** der Überlastfall durch thermische Überwachung des Verbrauchers detektierbar ist und die Abschaltung der Phase (L1) bei Überschreitung einer vorgegebenen Grenztemperatur erfolgt.

3. Verbraucher nach Anspruch 2, **dadurch gekennzeichnet, dass** ein Temperatursensor vorgesehen ist, um den Überlastfall zu detektieren.

4. Verbraucher nach einem der vorherigen Ansprüche, **dadurch gekennzeichnet, dass** der Verbraucher drei Teilverbraucher (1, 2, 3) aufweist, die jeweils an wenigstens eine Phase (L1, L2, L3) angeschlossen sind.

5. Verbraucher nach einem der vorherigen Ansprüche, **dadurch gekennzeichnet, dass** der Verbraucher ein Drehstrommotor ist und die Teilverbraucher (1, 2, 3) als Motorwicklungen ausgebildet sind, die in Sternund/oder Dreiecksschaltung geschaltet sind.

6. Verbraucher nach Anspruch 5, **dadurch gekennzeichnet, dass** als Schutzschaltung ein Schutzkontakt (4), insbesondere Wicklungsschutzkontakt, vorgesehen ist.

7. Verfahren zum Schutz eines drehfeldbetriebenen elektrischen Verbrauchers, insbesondere eines Drehstrommotors, gegen insbesondere thermisch Überlastung, **dadurch gekennzeichnet, dass** im Überlastfall der Verbraucher von nur einer Phase (L1) der N Phasen (L1, L2, L3) eines Drehstromnetzes getrennt wird.

8. Verfahren nach Anspruch 7, **dadurch gekennzeichnet, dass** die Temperatur des Verbrauchers überwacht wird und die Trennung der einen Phase (L1) bei Überschreitung einer vorgegebenen Grenztemperatur erfolgt.

9. Schutzschaltung (4) zur Druchführung eines Verfahrens nach den Ansprüchen 7 oder 8 zur Verwendung in/an einem drehfeldbetriebenen elektrischen Verbraucher, insbesondere einem Drehstrommotor.
